Europäisches Patentamt

European Patent Office

Office européen des brevets

(19)

(11) Numéro de publication : **0 096 616**
**B1**

# (12) FASCICULE DE BREVET EUROPÉEN

(45) Date de publication du fascicule du brevet :
30.07.86

(21) Numéro de dépôt : 83401037.3

(22) Date de dépôt : 25.05.83

(51) Int. Cl.⁴ : **F 16 K 17/168**, F 16 K 1/46,
B 23 P 11/00

(54) Obturateur destiné à être monté dans un corps.

(30) Priorité : 09.06.82 FR 8210541

(43) Date de publication de la demande :
21.12.83 Bulletin 83/51

(45) Mention de la délivrance du brevet :
30.07.86 Bulletin 86/31

(84) Etats contractants désignés :
BE DE FR GB IT NL SE

(56) Documents cités :
EP-A- 0 059 905
AU-B-   475 328
DE-A- 2 341 336
FR-A- 2 105 898
FR-A- 2 314 420
FR-A- 2 374 577
FR-A- 2 375 530

(73) Titulaire : ROBINETTERIE, S.F.R., S.A.
13 rue Jean Jacques Rousseau
F-80390 Fressenneville (FR)

(72) Inventeur : Huveteau, Jean Louis
Cavee de Dargnies
F-80390 Fressenneville (FR)

(74) Mandataire : Ecrepont, Robert
Cabinet Ecrepont 12 Place Simon Vollant (Porte de
Paris)
F-59800 Lille (FR)

**Description**

L'invention se rapporte à un ensemble obturateur destiné à être monté dans un corps, ainsi qu'à l'ensemble pourvu d'un tel obturateur notamment une soupape de sûreté.

Les soupapes de sûreté comprennent un corps délimitant une chambre dans laquelle débouchent trois manchons principaux dont un premier manchon logeant un ressort sollicitant constamment un clapet vers un siège consistant en un passage intercalé entre la chambre et le second manchon qui est raccordé à la source de fluide dont on veut limiter la pression.

De fait, tant que la pression de ce fluide reste inférieure à celle pour laquelle le ressort a été réglé, le clapet reste appliqué contre le siège dont il obture le passage, mais aussitôt que la pression atteint au moins celle pour laquelle le ressort a été réglé, le clapet se soulève de son siège et le fluide envahit la chambre d'où il s'échappe en empruntant le troisième manchon, généralement raccordé à un circuit de décharge.

On connaît (AU-B-475 328) un ensemble obturateur destiné à être monté dans un corps pourvu d'un siège, comprenant :

pour son ouverture automatique un clapet formé d'une cuvette logeant un joint d'étanchéité pincé contre le fond de la cuvette par un moyen de fixation et par l'intermédiaire duquel joint le clapet appuie sur le siège sous l'action d'un ressort appuyant sur la face opposée dite face arrière du clapet et s'élevant dans la chambre du corps afin que sa partie supérieure trouve également appui sous une butée associée au corps de manière réglable par vissage,

pour son ouverture manuelle, une tige de levée dont le pied est emprisonné dans un logement présent à l'arrière du clapet et qui, après avoir traversé librement le ressort et la butée, a sa tête saisie par une clé.

Dans cet ensemble, le moyen de fixation pince le joint contre le fond de la cuvette au moyen d'une collerette portée par un doigt qui traverse axialement un perçage central présenté par le joint puis la cuvette et qui porte par vissage une bague présentant le logement axial recevant le pied de la tige de levée manuelle qui y sera emprisonnée, laquelle tige présente à cet effet, à hauteur de l'extrémité de ce logement, une dimension transversale au moins localement inférieure à celle du pied. Le doigt présente quant à lui, dans sa partie traversant le joint, un diamètre plus important que dans sa partie traversant la cuvette et que le diamètre de perçage de cette cuvette afin que la face décolletée séparant ces deux parties vienne en butée contre le fond de la cuvette.

En plus du joint, au clapet est fixée la tige de levée manuelle dont généralement le pied se fixe par vissage ou par goupillage dans un logement où il reste emprisonné.

Déjà au niveau du clapet, il est donc nécessaire d'une part, de prévoir du côté du joint, un trou taraudé et/ou un bossage pour recevoir la vis ou avoir son bord maté sur une rondelle ainsi que de l'autre côté, un logement pour recevoir le pied de la tige et, d'autre part, d'y monter ces pièces et de les maintenir indépendamment l'une de l'autre.

Outre que ce montage est assez complexe, il s'avère que la tige étant démontable, l'usager peut être tenté de la démonter ce qui, lors du remontage, peut conduire à un réglage différent d'où un risque pour l'installation contrôlée.

Après interposition éventuelle d'une membrane et d'une coupelle d'appui, le ressort puis la butée qui sera associée au corps par tout moyen connu, sont enfilés sur la tige dont, enfin, la tête reçoit la clef de manœuvre telle un levier articulé sur la tige qu'il lève en prenant appui sur le dessus d'une pièce associée au corps comme par exemple l'est la butée du ressort ou un chapeau ou telle un volant de manœuvre qui, toutefois, contrairement à un robinet classique, ne peut à la fois être fixé sur la tige et monté par vissage sur le corps du fait que, lors de l'ouverture automatique du clapet, la tige doit pouvoir sortir librement.

Avec cet obturateur dont la tige vient en saillie, il peut malheureusement arriver qu'un obstacle affleure ladite tige et gêne l'ouverture de la soupape ce qui peut également avoir de lourdes conséquences.

Un résultat que l'invention vise à obtenir est un obturateur qui soit simple et fiable en ce sens que sa tige est inviolable et que celle-ci, bien que manœuvrable manuellement, ne vient pas en saillie au-dessus de la soupape et ne gêne pas pour autant l'ouverture automatique du clapet.

A cet effet, l'invention a pour objet un ensemble obturateur tel qu'il est caractérisé dans la revendication 1.

L'invention sera bien comprise à l'aide de la description ci-après faite, à titre d'exemple non limitatif, en regard du dessin ci-annexé qui représente schématiquement :

figure 1 une soupape vue en coupe par un plan axial,

figure 2 un détail de cette soupape vu à plus grande échelle.

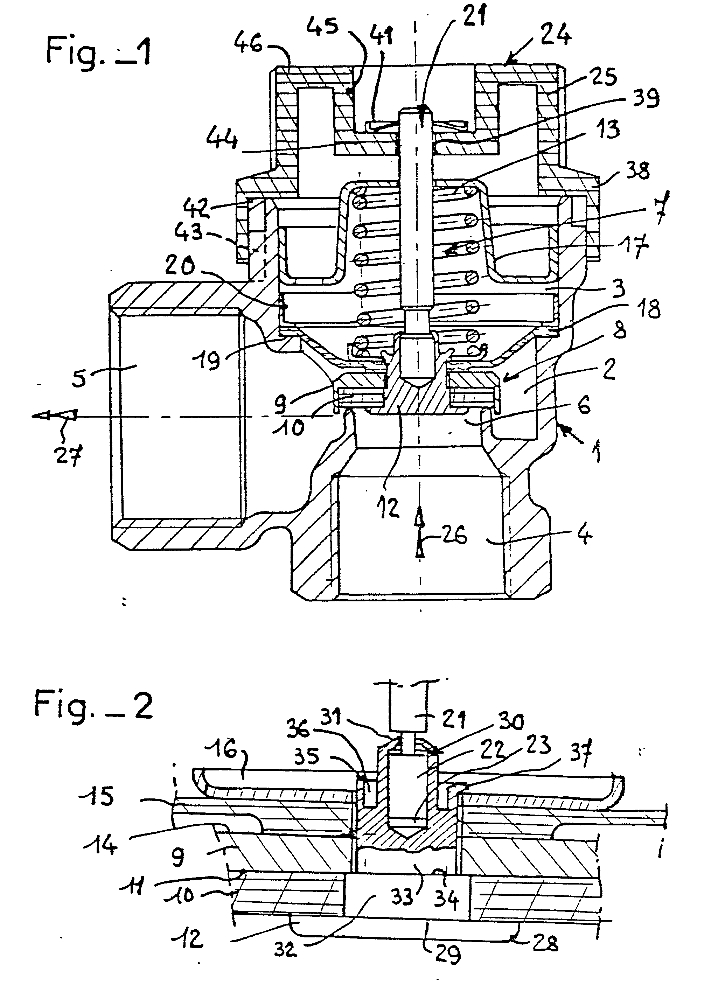

En se reportant à la figure 1, on voit que la soupape comprend un corps 1 formant une chambre 2 dans laquelle débouchent trois manchons 3, 4 et 5 dont l'un d'eux communique avec la chambre 2 par l'intermédiaire d'un passage 6 réalisant le siège d'un obturateur 7, comprenant principalement un clapet 8 formé d'une cuvette 9 logeant un joint d'étanchéité 10.

Ce joint est pincé contre le fond 11 de la cuvette 9 par un moyen de fixation 12.

C'est par l'intermédiaire de ce joint 10 que le clapet appuie sur le siège 6 sous l'action d'un ressort 13 appuyant sur la face opposée 14, dite face arrière, du clapet directement ou, comme dans l'exemple représenté, par l'intermédiaire d'une membrane d'étanchéité 15 et d'une coupelle 16 d'appui et de centrage de la base dudit ressort.

Le ressort s'élève dans le manchon qui, dans la chambre 2, est situé en face du siège 6 afin que sa partie supérieure trouve également appui sous une butée 17 associée au corps 1 de manière réglable par tout moyen connu tel un vissage (non représenté). Pincée entre la coupelle et la face arrière 14 du clapet avec toute la force du ressort, la partie médiane de la membrane 15 est associée de manière étanche avec ce clapet.

Pour obtenir la même étanchéité entre le corps 1 et le bord externe 18 de la membrane, ce bord est appliqué contre un rebord 19 usiné à cet effet dans le corps et pincé contre celui-ci par tout moyen connu tel une bague rapportée 20 ou par bridage ou vissage sur le corps du manchon logeant le ressort 13.

Afin de permettre la commande manuelle de ce clapet l'obturateur 7 comprend en outre une tige de levée manuelle 21 dont le pied 22 est emprisonné dans un logement 23 présent à l'arrière du clapet et qui, après avoir traversé librement le ressort 13 et la butée 17, a sa tête saisie par une clef 24 constituée par exemple par un volant de manœuvre 25.

Quant au fonctionnement automatique de cette soupape, il est classique, tant que la pression du fluide 26 reste inférieure à celle pour laquelle le ressort 13 a été réglé, le clapet 8 reste appliqué contre le siège dont il obture le passage, mais aussitôt que cette pression atteint au moins celle pour laquelle le ressort 13 a été réglé, le clapet 8 se soulève de son siège 6 et le fluide 26 envahit la chambre 2 d'où il s'échappe en empruntant le troisième manchon 5, généralement raccordé à un circuit de décharge 27.

Selon une caractéristique de l'invention, le moyen de fixation 12 pinçant le joint 10 contre le fond 11 de la cuvette 9 est constitué par une collerette 28 portée par un doigt 29 qui :

d'une part, traverse, axialement, le joint 10 et la cuvette 9 et, s'il y a, la membrane 15 et/ou la coupelle d'appui du ressort, qui à cet effet présentent tous un perçage central et,

d'autre part, a son extrémité 30 qui est tubulaire afin de présenter le logement axial 23 recevant le pied 22 de la tige 21 de levée manuelle qui y sera emprisonnée.

Selon une autre caractéristique de l'invention, d'une part, à hauteur de l'entrée du logement, la tige 21 présente au moins localement une dimension radiale inférieure à celle du pied 22 et, d'autre part, après montage, le bord 31 de la partie tubulaire 30 du doigt est rabattu vers le logement jusqu'à ce que l'entrée du logement ait une dimension transversale inférieure à celle du pied.

Grâce à ce procédé de montage, l'immobilisation du pied est ainsi assurée par un système indémontable sans destruction et donc inviolable ou tout au moins qui ne risque pas d'être mal remonté.

Dans sa partie 32 traversant le joint 10, le doigt 29 a un diamètre plus important que dans sa partie médiane 33 traversant la cuvette 9 et que le diamètre du perçage de cette cuvette.

La face décolletée 34 séparant ces deux parties 32, 33 vient alors en butée contre le fond 11 de la cuvette et permet d'éviter une meurtrissure du joint par un pincement excessif.

Dans sa partie tubulaire 30, le doigt 29 aura avantageusement un diamètre plus faible que dans la partie médiane 33 traversant la cuvette 9 et, s'il y a, la membrane et la cuvette afin que dans la face décolletée 35, séparant ces deux parties, puisse être creusée une gorge annulaire 36 délimitant dans la partie médiane une amorce de paroi tubulaire 37 qui, après montage, est rabattue derrière le bord du perçage central de la cuvette ou, s'il y a, de la membrane 15 et/ou de la coupelle 16.

Ce mode de montage permet de maintenir l'empilage et donc de préparer l'obturateur sous la forme d'un sous-ensemble parfaitement homogène susceptible d'être placé dans le corps même par un système automatique et qui remplit à lui seul les fonctions de clapet d'étanchéité, d'isolation du ressort, de centrage du ressort et, par la tige, de levée manuelle du clapet.

Pour cette levée manuelle du clapet, selon une caractéristique de l'invention, le volant de manœuvre 25 présente, d'une part, une jupe 38 par laquelle il est guidé en rotation autour du manchon 3 logeant le ressort 13 et, d'autre part, un orifice central 39 traversé avec jeu par l'extrémité supérieure de la tige 21 qui reçoit ensuite une butée 41.

Cette butée 41 permet, sans gêner l'ouverture automatique, à la fois d'empêcher le retrait du volant 25 et de commander par une levée du volant de manœuvre l'ouverture manuelle du clapet.

De préférence, la butée 41 consiste en une rondelle conique emmanchée sur la tige 21 de manière que la poussée dans le sens d'un dégagement tende à aplatir la rondelle et ce faisant à accentuer son ancrage dans la tige.

Afin de commander la levée du volant de manœuvre, plutôt que par vissage sur le corps, le volant porte à l'intérieur et à la base de la jupe 38 des rampes 42 coopérant avec deux rampes 43 solidaires dudit corps.

Selon une autre caractéristique de l'invention, tout autour de sa partie centrale 44 sur laquelle prend appui la butée 41 montée sur la tige, le volant de manœuvre 25 présente encore un rebord 45 de hauteur supérieure à la hauteur à laquelle la tête de la tige 21 peut s'élever lors de l'ouverture automatique du clapet.

Grâce à ce rebord, la tige reste libre de tout mouvement même en cas d'obstacle affleurant la face supérieure 46 du volant 25. Cette surface supérieure 46 sera, quant à elle, par ailleurs utile pour le marquage de la soupape.

## Revendications

1. Ensemble obturateur tel une soupape de sûreté destiné à être monté dans un corps (1) pourvu d'un siège (6),
comprenant pour son ouverture automatique

un clapet (8) qui est formé d'une cuvette (9) logeant un joint d'étanchéité (10) pincé contre le fond (11) de la cuvette (9) par un moyen de fixation (12) : le clapet appuie par l'intermédiaire dudit joint (10) sur le siège (6) sous l'action d'un ·ressort (13) appuyant sur la face opposée (14), dite face arrière du clapet et s'élevant dans la chambre (2) du corps (1) afin que la partie supérieure du ressort (13) trouve également appui sous une butée (17) associée au corps (1) de manière réglable par tout moyen connu tel un vissage,

comprenant pour son ouverture manuelle, une tige de levée manuelle (21) dont le pied (22) est emprisonné dans un logement (23) présent à ladite face arrière du clapet et qui, après avoir traversé librement le ressort et la butée (17), a sa tête saisie par une clé (24),

ledit moyen de fixation (12) pinçant le joint (10) contre le fond (11) de la cuvette (9) est constitué par une collerette (28) portée par un doigt (29) qui :

d'une part, traverse axialement un perçage central présenté par le joint (10) puis la cuvette (9) et,

d'autre part, porte le logement axial (23) recevant le pied (22) de la tige (21) de levée manuelle qui y sera emprisonnée, laquelle tige (21) présente à cet effet, à hauteur de l'extrémité (30) du logement axial (23), une dimension transversale au moins localement inférieure à celle du pied (22),

ledit doigt (29) du moyen de fixation (12) ayant dans sa partie (32) traversant le joint (10) un diamètre plus important que dans sa partie médiane (33) traversant la cuvette (9) et que le diamètre de perçage de cette cuvette afin que la face décolletée (34) séparant ces deux parties (32, 33) viennent en butée contre le fond (11) de la cuvette, cet ensemble étant caractérisé en ce que :

le doigt (29) du moyen de fixation (12) présente à son extrémité une partie tubulaire (30) afin de constituer le logement axial (23), pour le pied de tige (22),

après montage, le bord (31) de la partie tubulaire (30) du doigt (29) est rabattu vers la tige jusqu'à ce que l'entrée du logement axial ait une dimension transversale inférieure à celle du pied (22) de tige,

la partie tubulaire (30) du doigt (29) a un diamètre plus faible que la partie médiane (33) traversant la cuvette (9) et,

dans la face décolletée (35) séparant ces deux parties (30, 33) du doigt, est creusée une gorge annulaire (36) délimitant dans la partie médiane (33) une amorce de paroi tubulaire (37) qui, après montage, est rabattue derrière le bord du perçage central de la cuvette (9).

2. Ensemble obturateur tel une soupape de sûreté, selon la revendication 1, caractérisé en ce que le ressort (13) appuie sur ladite face arrière du clapet, par l'intermédiaire d'une membrane d'étanchéité (15) et d'une coupelle (16) d'appui et de centrage de la base dudit ressort, ladite membrane (15) étant d'une part enserrée entre la cuvette (9) et la coupelle (16) et d'autre part fixée dans le corps (1).

. 3. Ensemble selon la revendication 1 ou 2 dont la clé (24) est constituée par un volant de manœuvre (25) caractérisé en ce que le volant de manœuvre (25) présente, d'une part, une jupe (38) par laquelle il est guidé en rotation autour d'un manchon (3) logeant le ressort (13) et, d'autre part, un orifice central (39) traversé avec jeu par l'extrémité supérieure (40) de la tige (21) qui reçoit ensuite une butée (41).

4. Ensemble selon la revendication 3 caractérisé en ce que la butée (41) consiste en une rondelle conique emmanchée sur la tige (21) de manière que la poussée dans le sens d'un dégagement tende à aplatir la rondelle et ce faisant à accentuer son ancrage dans la tige.

5. Ensemble selon la revendication 3 ou 4 caractérisé en ce que, plutôt que par vissage sur le corps, afin de commander la levée du volant de manœuvre, celui-ci porte à l'intérieur et à la base de la jupe (38) des rampes (42) coopérant avec deux rampes (43) solidaires du corps.

6. Ensemble selon l'une quelconque des revendications 3 à 5 caractérisé en ce qu'autour de sa partie centrale (44) sur laquelle prend appui la butée (41) montée sur la tige, le volant de manœuvre (25) présente encore un rebord (45), de hauteur supérieure à la hauteur à laquelle la tête de la tige (21) peut s'élever lors de l'ouverture automatique du clapet.

**Claims**

1. A sealing unit such as a safety valve to be mounted in a body (1) provided with a seat (6),

comprising, for its automatic opening, a flap valve (8), which is formed by cup (9) accommodating a seal (10), which is held fast against the base (11) of the cup (9) by a securing means (12), the flap valve resting with the said seal (10) on the seat (6) under the action of a spring (13), which rests on the opposite face (14), called the rear face, of the flap valve, and which extends upwards in the chamber (2) of the body (1), such that the upper portion of the spring (13) also rests beneath an abutment (17), which is connected to the body (1) in an adjustable manner by any known means, such as a threaded joint,

comprising, for its manual opening, a manual lifting rod (21), the foot (22) of which is held fast in a housing (23) arranged at the said rear face of the flap valve, and which, after freely passing through the spring and the abutment (17), has its head gripped by a key (24),

the said securing means (12), which holds fast the seal (10) against the base (11) of the cup (9), being formed by a flange (28) supported by a finger (29), which :

on the one hand, axially penetrates both a central bore disposed in the seal (10), and the cup (9), and

on the other hand, bears the axial housing (23), which receives the foot (22) of the manual lifting rod (21), which is held fast therein, the said rod (21) having, to this end, a transverse dimension at the level of the end (30) of the axial housing (23), which, at least locally, is less than that of the foot (22),

the said finger (29) of the securing means (12) having, in its portion (32) which penetrates the seal (10), a diameter which is larger than in its middle portion (33) penetrating the cup (9), and which is larger than the diameter of the bore of the said cup, such that the free-cut face (34) separating the two portions (32, 33) abuts against the base (11) of the cup, the said unit being characterised in that :

at its end, the finger (29) of the securing means (12) comprises a tubular portion (30), in order to form the axial housing (23) for the foot of the rod (22),

after assembly, the edge (31) of the tubular portion (30) of the finger (29) is turned inwards towards the rod until the opening of the axial housing has a transverse dimension which is less than that of the foot (22) of the rod,

the tubular portion (30) of the finger (29) has a diameter which is less than the middle portion (33) penetrating the cup (9), and

in the free-cut face (35) separating the two portions (30, 33) of the finger, an annular groove (36) is cut, which, in the middle portion (35), defines the end of a tubular wall (37), which, after assembly, is folded back behind the edge of the central bore of the cup (9).

2. A sealing unit such as a safety valve according to claim 1, characterised in that the spring (13) rests against the said rear face of the flap valve via a sealing-tight diaphragm (15) and a supporting and centering collar (16) for the base of the said spring, the said diaphragm (15) being framed between the cup (9) and the collar (16) on the one hand, and being secured in the body (1) on the other hand.

3. A unit according to claim 1 or 2, the key (24) of which is formed by a control wheel (25), characterised in that the control wheel (25) comprises, on the one hand, a skirt (38), by means of which it is rotatably guided about a sleeve tube (3) accommodating the spring (13), and, on the other hand, a central aperture (39), which is penetrated with clearance by the upper end (40) of the rod (21), which then receives an abutment (41).

4. A unit according to claim 3, characterised in that the abutment (41) comprises a conical washer, which is shrunk onto the rod (21), such that the pressure in the direction of disengagement tends to flatten the washer and in doing so increases its anchorage in the rod.

5. A unit according to claim 3 or 4, characterised in that, in order to control the height of the control wheel, rather than being screwed onto the body, the said control wheel comprises sloped portions (42) on the inside and on the base of the skirt, which sloped portions cooperate with two sloped portions (43), which are integral with the body.

6. A unit according to any one of claims 3 to 5, characterised in that, about its central part (44), on which the abutment (41) mounted on the rod rests, the control wheel (25) also comprises a shoulder (45), the height of which is greater than the height which the head of the rod (21) may reach when the flap valve opens automatically.

**Patentansprüche**

1. Verschlußkonstruktion, deren ein Sicherheitsventil, das für den Einbau in einen mit einem Sitz (6) ausgebildeten Körper (1) bestimmt ist und folgende Elemente aufweist, nämlich zum automatischen Öffnen eine Klappe (8), die aus einem Teller (9) gebildet ist, der eine Gummidichtung (10) aufnimmt, die durch ein Befestigungsmittel (12) gegen die Unterseite (11) des Tellers (9) gepreßt ist, wobei die Klappe über die Dichtung (10) unter Wirkung einer Feder (13), die sich an der gegenüberliegenden Fläche, nämlich der Rückfläche der Klappe abstützt, auf dem Sitz (6) aufliegt, wobei sich die Feder (13) in die Kammer (2) des Körpers (1) hineinerstreckt, so daß sich der obere Abschnitt der Feder (13) gleichfalls unter einem mit dem Körper (1) verbundenen Widerlager (17) abstützt, derart, daß diese durch jedes bekannte Mittel, zum Beispiel eine Schraubverbindung, regulierbar ist ; und zum manuellen Öffnen eine manuelle Hubspindel (21), deren unteres Ende in einem an der Rückfläche der Klappe vorhandenen Lager (23) aufgenommen ist und deren oberes Ende bzw. Kopf von einem Schlüssel (24) erfaßt wird, nachdem sie die Feder und das Lager frei traversiert hat, wobei das Dichtung (10) gegen die Unterseite (11) des Tellers (9) drückende Befestigungsmittel durch einen Flansch (28) gebildet ist, der durch einen Daumen (29) gehalten ist, der einerseits eine in der Dichtung (10) und anschließend in dem Teller (9) vorhandene zentrale Bohrung axial durchgreift und andererseits das das untere Ende (22) der manuellen Hubspindel (21) aufnehmende und einschließende Axiallager (23) trägt, wobei die Spindel (21) zu diesem Zweck in Höhe des Endes (30) des Axiallagers (23) in transversaler Richtung eine Abmessung aufweist, die zumindest stellenweise kleiner ist als jene des unteren Endes bzw. Fußes (22), wobei der Daumen (29) des Befestigungsmittels (12) in seinem die Dichtung (10) durchquerenden Abschnitt (32) einen größeren Durchmesser als in seinem den Teller (9) durchquerenden mittleren Abschnitt (33) und als der Durchmesser der Bohrung dieses Tellers aufweist, so daß die die beiden Abschnitte trennende abgestochene Fläche (34) zur Anlage gegen die Unterseite (11) des Tellers gelangt, dadurch gekennzeichnet, daß der Daumen (29) des Befestigungsmittels (12) an seiner Extremität einen rohrförmigen Abschnitt (30) zur Bildung des Axiallagers (23) für das untere Ende der Spindel (22) aufweist, daß nach der Montage der Rand (31) des rohrförmigen Abschnitts (30) des Daumens (29) in Richtung auf die Spindel umgebogen wird, und zwar bis der Einlaß des Axiallagers kleinere transversale Abmessungen hat als das untere Ende der Spindel, daß der rohrförmige Abschnitt (30) des Daumens (29) einen kleineren Durchmesser als der den Teller (9) durchgreifende mittlere Abschnitt (33) aufweist und daß in der die beiden Abschnitte (30, 33) des Daumens teilenden bzw. trennenden abgestochenen Fläche (35) eine Ringnut (36) ausgebildet ist, die im mittleren Abschnitt (33) die Ausgangsstelle einer rohrförmigen Wandung (37) begrenzt, die nach der Montage hinter den Rand der zentralen Bohrung des Tellers (9) umgebogen wird.

2. Verschlußkonstruktion, deren ein Sicherheitsventil, nach Anspruch 1, dadurch gekennzeichnet, daß sich die Feder (13) über eine Dichtungsmembrane (15) und einen Teller (16) zur Lagerung und Zentrierung des unteren Teils der Feder an bzw. auf der Rückfläche der Klappe abstützt, wobei die Membrane (15) einerseits zwischen dem Teller (9) und dem Teller (16) eingespannt und andererseits in dem Körper (1) festgelegt ist.

3. Verschlußkonstruktion nach Anspruch 1 oder 2, deren Schlüssel (24) durch ein Betätigungsrad (25) gebildet ist, dadurch gekennzeichnet, daß das Betätigungsrad (25) einerseits einen Mantel (38) aufweist, über welchen es um eine die Feder (13) aufnehmende Hülse bzw. Muffe (3) gedreht wird, und andererseits eine zentrale Öffnung (39), die mit Spiel von dem oberen Ende (40) der Spindel (21) durchgriffen wird, die danach ein Widerlager (41) erhält bzw. aufnimmt.

4. Verschlußkonstruktion nach Anspruch 3, dadurch gekennzeichnet, daß das Widerlager (41) aus einer Tellerfeder besteht, die auf die Spindel (21) derart aufgeschrumpft ist, daß eine Schubwirkung in Ausströmungs- bzw. Austrittsrichtung zur Abflachung der Tellerfeder und dabei zur Anhebung deren Verankerung in der Spindel tendiert.

5. Verschlußkonstruktion nach Anspruch 3 oder 4, dadurch gekennzeichnet, daß statt der Schraubbefestigung an dem Körper das Betätigungsrad zur Steuerung dessen Hubs an der Innenseite und an der Basis bzw. Unterseite des Mantels (38) rampenförmige Teile (42) aufweist, die mit zwei rampenförmigen Teilen (43) zusammenwirken, die mit dem Körper fest verbunden sind.

6. Verschlußkonstruktion nach einem der Ansprüche 3 bis 5, dadurch gekennzeichnet, daß das Betätigungsrad (25) rund um seinen zentralen Bereich (44), an welchem sich das an der Spindel montierte Widerlager (41) abstützt, noch einen Rand bzw. Flansch (45) einer Höhe aufweist, die größer ist als die Höhe, über welche sich das obere Ende bzw. der Kopf der Spindel (21) im Zuge des automatischen Öffnens der Klappe hochbewegen kann.

Fig. _1

Fig. _2